Europäisches Patentamt

European Patent Office

Office européen des brevets

(19)

(11) Numéro de publication: **0 133 141**

**A1**

(12)

# DEMANDE DE BREVET EUROPEEN

(21) Numéro de dépôt: **84420118.6**

(22) Date de dépôt: **05.07.84**

(51) Int. Cl.⁴: **C 08 L 67/02**
C 08 K 3/00, C 08 J 5/18
G 11 B 5/704

(30) Priorité: **13.07.83 FR 8311930**

(43) Date de publication de la demande:
**13.02.85 Bulletin 85/7**

(84) Etats contractants désignés:
**DE GB IT LU NL**

(71) Demandeur: RHONE-POULENC FILMS
25, quai Paul Doumer
F-92408 Courbevoie(FR)

(72) Inventeur: Barbey, Jacques
11, Chemin de la Sereine Beynost
F-01700 Miribel(FR)

(72) Inventeur: Jaquier, Marie-Odile
7, Chemin de l'Ile
F-01700 Miribel(FR)

(74) Mandataire: Chichery, Guy et al,
RHONE-POULENC RECHERCHES Service Brevets Chimie
et Polymères Centre de Recherches de Saint-Fons B.P. 62
F-69192 St-Fons Cédex(FR)

(54) **Films en polyester chargés et biétirés et utilisation de ces films pour la fabrication notamment de bandes magnétiques.**

(57) La présente invention concerne des films en polyester, chargés et étirés biaxialement, qui présentent des propriétés de surface améliorées.

Plus particulièrement ces films sont caractérisés en ce qu'ils comportent en poids par rapport au polyester:

a) de 0,01 % à 1 % de kaolinite dont la dimension médiane des particules est inférieure ou égale à 1 micron,

b) de 0,01 % à 1 % d'oxyde de titane dont la dimension médiane des particules est inférieure ou égale à 1 micron.

Ces films servent notamment, après revêtement d'une de leurs faces par des composés métalliques appropriés, à la fabrication de bandes magnétiques.

EP 0 133 141 A1

Croydon Printing Company Ltd

FILMS EN POLYESTER CHARGES ET BIETIRES ET UTILISATION DE CES FILMS
POUR LA FABRICATION NOTAMMENT DE BANDES MAGNETIQUES

La présente invention concerne des films en polyester, chargés et étirés biaxialement, qui présentent des propriétés de surface améliorées, ainsi que l'utilisation de tels films notamment pour la fabrication de bandes magnétiques ou de condensateurs.

Afin de pouvoir être valablement utilisés comme supports de bandes magnétiques, les films polyester doivent répondre en particulier à deux exigences, qui en pratique s'avèrent être contradictoires. D'une part ces films doivent présenter un bon glissant permettant leur utilisation industrielle et notamment leur enroulement et d'autre part la bonne qualité des bandes magnétiques nécessite des films ayant une surface la plus lisse possible, afin d'éviter au maximum les défauts de reproduction des signaux qui seront enregistrés.

Une solution très fréquemment proposée pour améliorer le glissant des films en diminuant leur coefficient de frottement consiste à introduire dans le polyester des charges inertes, généralement inorganiques. Ainsi on utilise couramment dans ce but la kaolinite, la silice, d'autres oxydes ou sels inorganiques métalliques. Mais la présence de telles charges à la surface des films est à l'origine d'inconvénients au stade des bandes magnétiques. Cela est d'autant plus gênant que l'on recherche actuellement, en particulier dans le domaine de la vidéo, des bandes magnétiques ayant un état de surface avec le moins possible de défauts ; cela implique bien évidemment que les films supports possèdent eux-mêmes un excellent état de surface et notamment une rugosité qui soit de plus en plus faible en fonction de la qualité exigée au niveau des produits finis.

La rugosité d'un film s'exprime généralement au moyen de deux valeurs :

- une valeur correspondant à la rugosité totale ou maximale $R_t$ (également appelée PV selon les termes anglais "peak-to-valley") qui se définit comme l'écart maximal de la rugosité.

- une valeur correspondant à la rugosité moyenne arithmétique

$R_a$ (également appelée CLA selon les termes anglais "center line average).

La rugosité totale ou maximale $R_t$ et la rugosité moyenne $R_a$ sont définies et leur mesure est décrite dans le Japanese Industriel Standard JIS B 0601-1982.

D'autres charges sont également utilisées, telles que par exemple le dioxyde de titane ; ce dernier apporte un meilleur compromis entre le coefficient de frottement et la rugosité, mais la turbidité (ou haze) importante qu'il confère au film rend difficile la récupération pourtant économiquement nécessaire des déchets de fabrication.

Il a également été proposé dans la demande de brevet japonais n° 87 936/1975 publiée sous le n° 40929/1980 d'utiliser des charges inertes dont les particules sont essentiellement réparties en deux populations de dimensions différentes : certaines des particules possèdent une dimension de 3 à 6 microns tandis que d'autres particules ont une dimension de 1 à 2,5 microns.

Un objet de la présente invention est de fournir des films en polyester orientés biaxialement et chargés par au moins deux composés inorganiques inertes se différenciant par leur nature et non obligatoirement par la répartition granulométrique de leurs particules respectives.

Plus précisément l'invention concerne des films en polyester chargés et étirés biaxialement caractérisés en ce qu'ils comportent en poids par rapport au polyester :

a) de 0,01 % à 1 % de kaolinite dont la dimension médiane des particules est inférieure ou égale à 1 micron,

b) de 0,01 % à 1 % d'oxyde de titane dont la dimension médiane des particules est inférieure ou égale à 1 micron.

Par dimension médiane de particules on entend la valeur du diamètre sphérique correspondant à 50 % du volume de l'ensemble des particules et lue sur la courbe de distribution cumulée reliant les volumes des particules au diamètre des particules.

Par diamètre sphérique d'une particule on entend le diamètre d'une sphère ayant un volume équivalent à celui de ladite particule.

De préférence les films selon l'invention comportent de la kaolinite et de l'oxyde de titane dont la dimension médiane des particules est inférieure ou égale à 0,7 micron.

Le polyester qui est utilisé pour préparer les films selon l'invention peut être tout polyester connu tel qu'obtenu à partir d'un diacide carboxylique ou de ses esters d'alkyle inférieur, comme l'acide téréphtalique, l'acide isophtalique, l'acide orthophtalique, l'acide naphtalènedicarboxylique-2,5, l'acide naphtalènedicarboxylique-2,6, l'acide naphtalènedicarboxylique-2,7, l'acide succinique, l'acide sébacique, l'acide adipique, l'acide azélaïque, l'acide diphényldicarboxylique et l'acide hexahydrotéréphtalique et d'un ou plusieurs diols comme l'éthylène glycol, le propanediol-1,3, le butanediol-1,4, le néopentylglycol et le cyclohexanediméthanol-1,4.

Généralement le polyester utilisé est un homopolymère ou un copolymère comportant essentiellement des motifs téréphtalate d'alkylène. De préférence ledit polyester comporte au moins 80 % en poids de motifs téréphtalate d'éthylèneglycol et, plus préférentiellement encore, au moins 90 % en poids de tels motifs. Ce peut être également un mélange de plusieurs homopolymères dont 80 % en poids et de préférence 90 % en poids sont du polytéréphtalate d'éthylèneglycol.

La préparation de tels polyesters est connue en soi.

Généralement elle comporte une phase d'interéchange (ou transestérification) entre un ester d'alkyle inférieur de l'acide téréphtalique (tel que le téréphtalate de diméthyle) et l'éthylèneglycol, en présence d'un catalyseur tel que par exemple l'acétate de manganèse ou l'acétate de calcium ou l'acétate de magnésium.

Ensuite se situe la phase de polycondensation du téréphtalate d'éthylèneglycol en présence d'un catalyseur tel que l'oxyde d'antimoine ou un composé du germanium et, le plus souvent, d'un composé phosphoré tel que l'acide phosphoreux, l'acide phosphorique ou leurs esters.

Les charges sont de préférence introduites pendant la phase de polycondensation sous la forme d'une suspension des particules dans le diol utilisé.

De telles suspensions peuvent être réalisées par simple broyage de la charge ou des charges et de l'éthylèneglycol ; il peut également s'agir d'un broyage suivi d'une centrifugation qui permet d'éliminer les particules les plus grosses et les agglomérats de particules ; les suspensions de charge peuvent aussi être homogénéisées par des techniques connues, telles que par exemple un traitement à l'aide d'ultrasons.

Pour la préparation des films selon l'invention on peut opérer notamment selon les variantes de procédé suivantes :

- les deux charges peuvent être introduites sous la forme de deux suspensions dans l'éthylèneglycol ou encore sous la forme d'une suspension commune des deux charges dans l'éthylèneglycol, pendant la fabrication du polyester ;

- chacune des charges peut être introduite dans un lot différent de polyester, les deux polyesters chargés respectivement par la kaolinite et l'oxyde de titane ainsi obtenus étant ensuite mélangés avant l'extrusion avec si nécessaire un polyester non chargé.

Cette dernière variante présente l'avantage pratique de permettre de préparer des films selon l'invention, comportant diverses proportions respectives de kaolinite et d'oxyde de titane, en n'utilisant que deux lots de polyester monochargés et si nécessaire un lot de polyester non chargé.

Le rapport pondéral kaolinite/oxyde de titane des films selon l'invention peut varier dans de larges limites. Habituellement ce rapport pondéral est de 0,2 à 5.

Préférentiellement on adopte un rapport pondéral kaolinite/oxyde de titane de 0,5 à 2 dans les films selon l'invention. Le taux global de ces charges dans les films est généralement de 0,05 % à 1,2 % en poids par rapport au polyester.

De préférence l'utilisation de tels films pour la préparation de bandes magnétiques requiert un taux global de kaolinite + oxyde de titane de 0,1 % à 0,7 % en poids par rapport au polyester.

Les films en polyester étirés biaxialement selon la présente invention peuvent être préparés en extrudant tout d'abord le polyester en un film amorphe contenant la kaolinite et l'oxyde de titane, puis en étirant ce film amorphe de manière connue en soi. L'étirage peut être effectué de manière successive : tout d'abord un étirage dans la direction de la machine (étirage longitudinal) suivi d'un étirage perpendiculaire à la direction de la machine (étirage transversal) ou l'inverse, c'est-à-dire un étirage transversal suivi d'un étirage longitudinal.

Généralement l'étirage longitudinal est effectué avec un taux de 3 à 5 (c'est-à-dire que la longueur du film étiré représente de 3 à 5 fois la longueur du film amorphe) et à une température de 80° à 100°C et l'étirage transversal est effectué avec un taux de 3 à 5 à une température de 90° à 120°C.

L'étirage peut également être effectué de manière simultanée, c'est-à-dire simultanément dans le sens longitudinal et dans le sens transversal, par exemple avec un taux de 3 à 5 et à une température de 80° à 100°C.

Après l'étirage le film est thermofixé de manière également connue en soi, en général à une température de 180° à 230°C.

Les films ainsi préparés ont généralement une épaisseur de 1 à 50 microns selon l'usage auquel on les destine. Mais il est bien évident que l'on peut avoir des films selon l'invention d'épaisseur plus grande si on le souhaite.

Les films selon l'invention présentent de bonnes propriétés de surface permettant leur utilisation pour des applications exigeantes telles que les bandes magnétiques pour vidéo.

Généralement la rugosité totale $R_t$, telle que définie précédemment, des films selon l'invention varie de 0,05 à 0,5.

Quant à la rugosité moyenne $R_a$ également définie précédemment, elle varie habituellement de 0,005 à 0,05.

Une autre caractéristique importante des films est leur coefficient de frottement dynamique $_k$ qui permet d'apprécier le glissant desdits films et donc leur capacité d'être enroulés industriellement et plus généralement leur machinabilité.

Le coefficient de frottement dynamique $_k$ est défini et sa méthode de mesure est décrite à la page 11 (point 3) de la demande de brevet européen publiée sous le numéro 66 997.

Le coefficient de frottement dynamique $_k$ des films selon la présente invention est le plus souvent de 0,15 à 0,5.

Une information relative à la surface des films qu'il est important de connaître est la distribution des hauteurs de pics (appelée également peak height distribution ou PHD). Il faut pour cela tout d'abord définir la notion de pic. Dans le cadre de la présente invention on définira un pic comme étant une protubérance à la surface du film.

La hauteur des pics peut être mesurée par toute méthode interférométrique adaptée à cet effet. On peut par exemple utiliser une méthode interferométrique avec détection de l'amplitude de la phase [voir par exemple la méthode décrite par G. ROBLIN,, J. Optics (Paris) 1977 volume 8, No. 5, pages 309-318]. Ainsi par interférométrie on peut déterminer les hauteurs de pics et commodément évaluer le nombre de pics ayant des hauteurs situées dans des intervalles dont la valeur est une fraction de la longueur d'onde utilisée pour la mesure. Les bornes des intervalles, l'étendue de l'intervalle servant au comptage peuvent être modulés et fixés à la demande. On peut par exemple déterminer le nombre de pics au $mm^2$ dans des intervalles de dimensions allant de :

- 0,15 m à 0,29 m.
- 0,29 m à 0,44 m
- 0,44 m à 0,79 m

Encore une autre caractéristique significative des films destinés à servir de support à des bandes magnétiques est la présence de défauts dus à la présence de pics de dimension trop élevée par rapport aux autres aspérités de surface (il est bien connu que cette présence est néfaste puisqu'elle implique en effet des pertes d'information et donc des défauts comme les "drop out" dans le cas des bandes magnétiques vidéo). On détermine par la mesure interférométrique décrite précédemment le nombre de défauts ayant une hauteur de 1 micron ou plus par centimètre carré de surface.

Enfin une autre valeur qui caractérise les films chargés est celle qui mesure leur turbidité, appelée habituellement haze. La mesure de cette turbidité en haze se fait selon la norme ASTM D 1003. Le haze des films chargés par l'oxyde de titane est généralement trop élevé pour que la récupération des déchets de ces films puisse se faire, en particulier lorsque ces déchets doivent être recyclés dans les films pour l'utilisation dans l'emballage.

Un avantage indirect des films selon l'invention est que l'on peut, si on le désire, réduire leur taux global en charges et par conséquent réduire la valeur du haze de manière très sensible, sans pour autant augmenter de manière rédhibitoire le coefficient de frottement.

On parvient ainsi à obtenir des films chargés présentant un haze compatible avec le recyclage éventuel des déchets.

Un autre objet de la présente invention réside dans l'utilisation des films en polyester chargés et étirés biaxialement décrits précédemment pour la préparation de bandes magnétiques. Ces bandes peuvent servir notamment pour des enregistrements de sons (bandes audio), d'images (bandes vidéo) ou d'informations diverses (bandes pour ordinateurs).

Ces bandes magnétiques sont obtenues par revêtement des films polyester à l'aide de couches de composés métalliques appropriés aux divers usages prévus.

La présente invention couvre également de telles bandes magnétiques ainsi fabriquées à partir des films en polyester chargés par la kaolinite et l'oxyde de titane.

Enfin on peut également utiliser les films selon l'invention comme couche diélectrique dans les condensateurs.

Les exemples qui suivent ont pour but d'illustrer l'invention sans en réduire la portée.

EXEMPLE 1

A. Préparation d'un polytéréphtalate d'éthylèneglycol chargé par de l'oxyde de titane

a) Interéchange :

Dans un autoclave on charge 142,5 kg de téréphtalate de diméthyle à 155°C, 86,3 kg d'éthylèneglycol à 110°C, 99,5 g d'acétate de calcium et 71,3 g d'oxyde d'antimoine.

On agite et on distille le méthanol formé.

On charge ensuite dans la masse réactionnelle la quantité d'acide phosphorique nécessaire pour éviter la précipitation de l'acétate de calcium dans le polymère.

On rajoute alors 3,5 kg d'une suspension à 20 % en poids de $TiO_2$ dans l'éthylèneglycol.

Cette suspension est préparée de la manière suivante :

- on mélange à froid dans un empâteur-mélangeur à turbine pendant environ 1 heure :

  . 62 kg de TiO$_2$ HOMBITAN LW-S de la firme SACHTLEBEN

  . 56 kg d'éthylèneglycol ;

- on disperse finement cette suspension par passages successifs à travers deux broyeurs à billes fonctionnant en continu, (chargés de billes de diamètre compris entre 1 et 1,5 millimètre) ;

- la suspension broyée est ensuite diluée 20 % ;

- la suspension est ensuite stockée avec agitation. Le TiO$_2$ a une dimension médiane de particules de 0,4 micron. La dimension médiane des particules de la charge en suspension est mesurée à l'aide d'un analyseur de granulométrie par centrifugation : appareil de marque HORIBA, type Capa 500.

Après l'introduction de la suspension de TiO$_2$, on distille l'excès d'éthylèneglycol jusqu'à une température de la masse réactionnelle de 260°C.

Le mélange obtenu est envoyé dans l'autoclave de polycondensation après filtration.

b) Polycondensation :

L'autoclave de polycondensation comporte un agitateur .

La polycondensation commence à 265°C. On met l'appareil sous pression réduite (5330 Pascals, puis 133 Pascals).

La polycondensation est poursuivie jusqu'à l'obtention d'un polyester ayant une viscosité intrinsèque de 0,65 dl/g (mesurée dans l'orthochlorophénol à 25°C en solution à 1 %). Le polytéréphtalate d'éthylèneglycol (I) obtenu est coulé et extrudé sous forme de granulés. Il comporte 0,50 % en poids de TiO$_2$ par rapport au polymère proprement dit.

B. Préparation d'un polytéréphtalate d'éthylèneglycol chargé par de la kaolinite

On opère comme en A, mais la suspension de kaolinite est préparée de la façon suivante :

Dans un broyeur contenant des billes de verre ayant un diamètre de 3 millimètres entraînées par une turbine, on charge :

- 28,5 kg d'éthylèneglycol
- 19 kg de kaolin HG 90 de HUBER Co
- 30 g de dispersant.

Le broyage dure 1 heure.

La suspension broyée est filtrée, puis est diluée à 15 % en poids par de l'éthylèneglycol et est réchauffée.

La suspension diluée de kaolinite est centrifugée dans une centrifugeuse à ouverture de bol ayant un nombre de G supérieur à 4500.

La concentration en kaolinite de la suspension à la sortie de la centrifugeuse est de 10 % en poids.

La suspension de kaolinite ainsi préparée est introduite dans l'autoclave d'interéchange comme la suspension de $TiO_2$.

Deux lots de polytéréphtalate d'éthylèneglycol chargés par de la kaolinite sont ainsi préparés :

- lot II comportant 0,40 % en poids de kaolinite par rapport au polymère (la dimension médiane des particules de la kaolinite utilisée est de 0,5 micron) ;
- lot III comportant 0,40 % en poids de kaolinite par rapport au polymère (la dimension médiane des particules de la kaolinite utilisée est de 0,6 micron).

C. Préparation de polytéréphtalate d'éthylèneglycol (PET) non chargé

On opère comme décrit précédemment, mais sans ajouter de charge au polymère.

On obtient ainsi le lot IV de PET non chargé

EXEMPLES 2 à 8

A partir de diverses proportions relatives des polymères I, II (ou III) et IV dont la préparation a été décrite auparavant, différents films ont été extrudés.

Le mélange intime des polymères se fait au niveau de la charge des granulés dans l'extrudeuse.

Après l'extrusion d'un film amorphe, celui-ci est étiré d'abord longitudinalement avec un taux de 3,7 environ à 90°C, puis transversalement avec un taux de 3,7 environ à 110°C.

La thermofixation des films ainsi obtenus se fait à 210°C.

Ces films ont une épaisseur d'environ 14,5 microns.

Les mesures effectuées sur ces films sont les suivantes :

1) Mesure de la rugosité (totale et moyenne) à l'aide d'un perthomètre de marque PERTHEN équipé d'un palpeur à référence externe FT 25 (rayon de courbure du diamant : 3,5 microns) :

  - longueur de palpage : 1,5 mm
  - longueur d'onde du filtre par cut.off : 0,08 mm.

2) Mesure du haze à l'aide d'un hazemètre de marque GARDNER.

3) Mesure du coefficient de frottement dynamique $_k$ selon la méthode indiquée dans la description.

Le $_k$ est déterminé par défilement d'une bande de film de 25 mm de largeur sur un galet métallique fixe de 25 mm de diamètre et de rugosité $R_t$ égale à 0,3 micron.

La vitesse de défilement est de 5 mètres/minute et la longueur de film testée est de 100 à 150 mètres.

4) Mesure de PHD : Elle est faite selon la méthode décrite dans la partie descriptive.

Des films correspondants aux témoins a, b et c et aux exemples 2, 3, 4, 5, 6, 7 et 8 sont ainsi préparés et testés.

Les caractéristiques de ces films ainsi que les proportions relatives des polymères I, II, (ou III) et IV qui ont servi à les préparer sont rassemblés dans le tableau ci-après.

| Essais | Type de charge | Proportions des différents polymères m | dimension médiane des particules | charge/polyester (% en poids) | Haze % | k 0 | k 100 m | $R_t$ (en m) | $R_a$ (en m) | PHD (*) |
|---|---|---|---|---|---|---|---|---|---|---|
| Témoin a | kaolinite | 100 % de II | 0,5 | 0,40 | 5 | 0,25 | 0,5 | 0,19 | 0,02 | 2020 ; 9,5 ; 0,5 |
| Témoin b | kaolinite | 100 % de III | 0,6 | 0,40 | 6,4 | 0,25 | 0,35 | 0,25 | 0,025 | 3110 ; 190 ; 33 |
| Témoin c | TiO$_2$ | 50 % de I / 50 % de IV | 0,4 | 0,25 | 12,3 | 0,2 | 0,3 | 0,07 | 0,007 | 545 ; 3,3 ; 0,8 |
| Exemple 2 | kaolinite + TiO$_2$ | 25 % de II / 55 % de IV / 20 % de I | 0,5 / 0,4 | 0,10 / 0,10 | 6 | 0,18 | 0,35 | 0,13 | 0,011 | 585 ; 3 ; 0,35 |
| Exemple 3 | kaolinite + TiO$_2$ | 50 % de II / 10 % de IV / 40 % de I | 0,5 / 0,4 | 0,20 / 0,20 | 13 | 0,2 | 0,35 | 0,15 | 0,014 | |
| Exemple 4 | kaolinite + TiO$_2$ | 25 % de III / 55 % de IV / 20 % de I | 0,6 / 0,4 | 0,10 / 0,10 | 6,6 | 0,22 | 0,36 | 0,15 | 0,015 | |
| Exemple 5 | kaolinite + TiO$_2$ | 50 % de III / 10 % de IV / 40 % de I | 0,6 / 0,4 | 0,20 / 0,20 | 13,7 | 0,15 | 0,28 | 0,20 | 0,018 | 1590 ; 80 ; 14 |
| Exemple 6 | kaolinite + TiO$_2$ | 25 % de III / 35 % de IV / 40 % de I | 0,6 / 0,4 | 0,10 / 0,20 | 11,6 | 0,17 | 0,3 | 0,15 | 0,015 | 1210 ; 85 ; 8 |
| Exemple 7 | kaolinite + TiO$_2$ | 80 % de II / 20 % de I | 0,5 / 0,4 | 0,32 / 0,10 | 8,9 | 0,18 | 0,34 | 0,16 | 0,017 | |
| Exemple 8 | kaolinite + TiO$_2$ | 20 % de II / 16 % de IV / 64 % de I | 0,5 / 0,4 | 0,08 / 0,32 | 15,8 | 0,18 | 0,35 | 0,12 | 0,011 | |

(*) On indique ici et dans l'ordre le nombre des pics présents respectivement dans les intervalles suivants : (0,15 à 0,29 m ; 0,29 à 0,44 m ; 0,44 à 0,79 m).

REVENDICATIONS

1°) Film en polyester chargé et étiré biaxialement caractérisé en ce qu'il comporte en poids par rapport au polyester :

a) de 0,01 % à 1 % de kaolinite dont la dimension médiane des particules est inférieure ou égale à 1 micron,

b) de 0,01 % à 1 % d'oxyde de titane dont la dimension médiane des particules est inférieure ou égale à 1 micron.

2°) Film selon la revendication 1 caractérisé en ce qu'il comporte de la kaolinite dont la dimension médiane des particules est inférieure ou égale à 0,7 micron et de l'oxyde de titane dont la dimension médiane des particules est inférieure ou égale à 0,7 micron.

3°) Film selon l'une des revendications 1 et 2 caractérisé en ce que le polyester est un homopolymère ou un copolymère comportant au moins 80 % en poids et de préférence au moins 90 % en poids de motifs téréphtalate d'éthylèneglycol.

4°) Film selon l'une des revendications 1 à 3 caractérisé en ce que la kaolinite et l'oxyde de titane qu'il contient sont dans un rapport pondéral de 0,2 à 5.

5°) Film selon l'une des revendications 1 à 3 caractérisé en ce que la kaolinite et l'oxyde de titane qu'il contient sont dans un rapport pondéral de 0,5 à 2.

6°) Film selon l'une des revendications 1 à 5 caractérisé en ce que le taux global de kaolinite et d'oxyde de titane qu'il contient est de 0,05 % à 1,2 % en poids par rapport au polyester et de préférence de 0,1 % à 0,7 % en poids par rapport au polyester.

7°) Film selon l'une des revendications 1 à 6 caractérisé en ce qu'il est préparé à partir d'un mélange de 2 lots de polyester chargés l'un par la kaolinite et l'autre par l'oxyde de titane et éventuellement d'un lot de polyester non chargé.

8°) Film selon l'une des revendications 1 à 6 caractérisé en ce qu'il est préparé à partir d'un lot de polyester contenant à la fois la kaolinite et l'oxyde de titane.

9°) Bande magnétique obtenue par revêtement de film selon l'une des revendications 1 à 8.

10°) Utilisation d'un film selon l'une des revendications 1 à 8 comme couche diélectrique de condensateur.

Office européen
des brevets

**RAPPORT DE RECHERCHE EUROPEENNE**

**0133141**
Numéro de la demande

EP  84 42 0118

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl 4) |
|---|---|---|---|
| Y | EP-A-0 066 997  (TEIJIN) <br> * Revendications 1-10;  page 7, alinéa 1 * | 1-10 | C 08 L    67/02 <br> C 08 K    3/00 <br> C 08 J    5/18 <br> G 11 B    5/704 |
| Y | US-A-3 221 226  (W.D. KENNEDY et al.) <br> * Revendications 1-5 * | 1-10 | |
| Y | CHEMICAL ABSTRACTS, vol. 89, no. 16, 16 octobre 1978, page 75, no. 130959t, Columbus, Ohio, USA; & JP - A - 78 74126 (TEIJIN LTD.) 01-07-1978 <br> * Abrégé * | 1-10 | |
| Y | CHEMICAL ABSTRACTS, vol. 90, no. 4, janvier 1979, page 40, no. 24298n, Columbus, Ohio, USA; & JP - A - 78 114 894 (TORAY INDUSTRIES INC.) 06-10-1978 <br> * Abrégé * | 1-10 | **DOMAINES TECHNIQUES RECHERCHES (Int. Cl.4)** <br><br> C 08 L |

Le present rapport de recherche a ete établi pour toutes les revendications

| Lieu de la recherche | Date d'achèvement de la recherche | Examinateur |
|---|---|---|
| LA HAYE | 22-10-1984 | DECOCKER L. |